# EUROPÄISCHE PATENTSCHRIFT

(11) **EP 3 826 876 B1**
(45) Veröffentlichungstag und Bekanntmachung des Hinweises auf die Patenterteilung: **16.11.2022**
(21) Anmeldenummer: 19742170.4
(22) Anmeldetag: 16.07.2019
(51) Int. Cl.: B60K 35/00, B60K 37/06, G02F 1/1335

(54) **ANZEIGEEINRICHTUNG FÜR EIN KRAFTFAHRZEUG**
DISPLAY DEVICE FOR A MOTOR VEHICLE
DISPOSITIF D'AFFICHAGE POUR UN VÉHICULE AUTOMOBILE

(30) Priorität: 25.07.2018 DE 102018212445
(43) Veröffentlichungstag der Anmeldung: 02.06.2021
(73) Patentinhaber: VOLKSWAGEN AKTIENGESELLSCHAFT, 38440 Wolfsburg (DE)
(72) Erfinder: RICKERS, Christoph, 38165 Lehre (DE); SCHEIBLE, Michael, 38165 Flechtorf (DE); NEUMANN, Jan, 38154 Königslutter (DE)
(86) Internationale Anmeldenummer: PCT/EP2019/069066
(87) Internationale Veröffentlichungsnummer: WO 2020/020694

(56) Entgegenhaltungen:
- EP-B1- 2 755 842
- JP-A- 2008 139 555
- US-A1- 2010 265 425
- US-B1- 6 547 616

## Beschreibung

Die Erfindung betrifft ein Anzeige- und/oder Bedienelement für ein Kraftfahrzeug.

Instrumententafeln von Personenkraftwagen oder anderen Kraftfahrzeugen sind mit einer Vielzahl von Anzeigeinstrumenten (wie Tachometer mit Kilometerzähler, Drehzahlmesser, Kühlmitteltemperatur- und Kraftstoffanzeige, Uhr, Kontrollleuchten für Fahrtrichtungsanzeiger, Motorölstand, Batterieladezustand, Fernlicht oder dergleichen), Anzeige- und Bedienelementen (wie Kippschalter für Fahrzeugbeleuchtung, Warnblinkanlage oder Heckscheibenheizung, Regelschieber oder -schalter zur Regelung der Temperatur und Luftverteilung einer Belüftungsanlage oder dergleichen) sowie mit den im vorderen Teil des Kraftfahrzeugs positionierten Ausströmer der Belüftungsanlage ausgestattet.

Die bekannten Anzeigeeinrichtungen basieren zumeist auf dem Prinzip der Flüssigkristalldisplays.

Der Flächenbedarf der anzuzeigenden Informationen in Multifunktionsanzeigen kann sich laufend ändern, je nachdem von welcher Funktionseinrichtung und von welcher speziellen Funktion Ausgabeinhalte angezeigt werden.

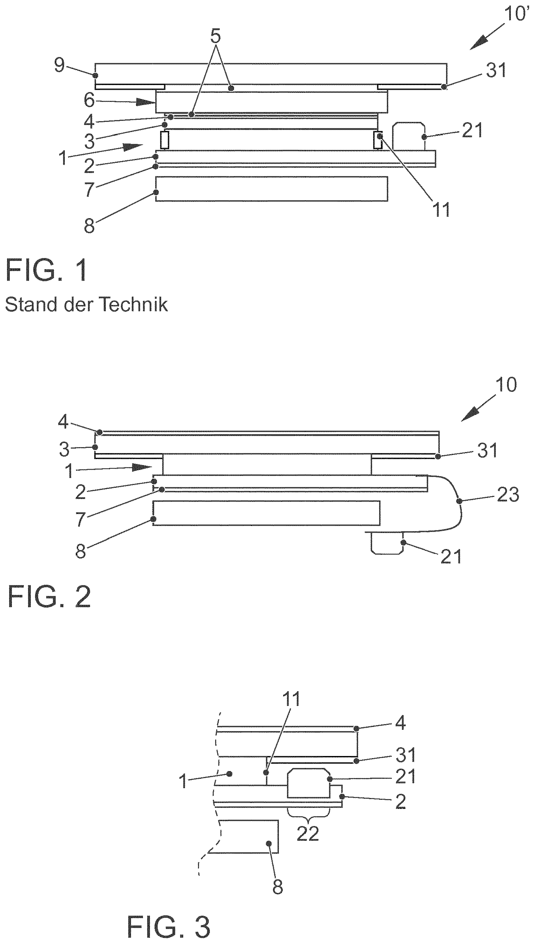

Figur 1 zeigt eine typische Abfolge und erforderliche Komponenten eines Anzeige- und Bedienelements. Von unten nach oben ist zunächst die Hinterleuchtung, das sogenannte Backlight, bestehend aus LEDs, Lichtleiter, Diffusor, Reflektor und Recycling-Folien, angeordnet, gefolgt von einem Luftspalt. Daran angeschlossen folgt eine als Dünnfilmtransistor (TFT - thin film transistor) wirkende Schicht. Die sogenannte TFT-Schicht oder auch TFT-Glas umfasst als Mehrkomponentensystem, insbesondere als Mehrschichtsystem, die Elektrodenstrukturen, Leitungen sowie die Dünnschichtelektronik, um die einzelnen Pixel ansteuern zu können. Auf der Unterseite der TFT-Schicht ist ein erster linearer Polarisationsfilter (Polfilter) aufgebracht (ein dazu vorzugsweise um 90° bzgl. seiner Polarisationsrichtung verdrehter Polarisationsfilter ist als "oberer" Polfilter auf dem Farbfilterglas angeordnet. Die vorgenannte Ausführung ist auch als *normal black* bekannt. Alternativ können beide Polfilter die identische Polarisationsrichtung aufweisen, was unter der Bezeichnung *normal white* bekannt ist). Die TFT Schicht beherbergt neben der Dünnschichtelektronik die zugehörige Steuertechnik in Form von Treiber-ICs (Gate/Source) für die Ansteuerung der Pixelschaltkreise. Das Farbfilterglas wird so bezeichnet, weil es für jedes Pixel Farbfilter für die RGB Subpixel enthält. Je nach Einsatzanforderungen wird die äußere Fläche des Coverglases häufig noch mit die optischen Eigenschaften optimierenden Beschichtungen, wie zum Beispiel Anti-Glare, Anti-/Low-Relfex, Anti-Fingerprint, Easy-to-Clean, versehen.

Farbfilterglas, TFT-Glas und eine geeignete seitliche Einfassung bilden eine zwischen den Gläsern befindliche und mit Flüssigkristallen befüllte Zelle aus.

Auf diese das eigentliche Display darstellende Struktur wird dann per optischen Bondings häufig ein Touch-Sensor aufgebracht. Auf den Touch-Sensor wird ebenfalls mittels optischen Bondings ein Coverglas aufgebracht, welches den äußeren Abschluss des Anzeige-Bedienelements bildet. Das Coverglas ist in der Regel auf der Unterseite mit einem oder mehreren Maskierungsdrucken geeignet dekoriert. Für sämtliche Komponenten können verschiedenste Technologien und Materialien mit jeweils spezifischen Vor- und Nachteilen Verwendung finden und das Gesamtsystem so optimal an den geplanten Verwendungszweck angepasst werden.

Der bekannten Grundstruktur und den besonderen Ausführungen ist gemein, dass die entstehende Struktur eine Vielzahl funktioneller Schichten umfasst, deren Gesamthöhe die Dicke des Anzeige- und/oder Bedienelements bestimmt. Je größer die Gesamthöhe, desto größer ist der Platzbedarf des Anzeige- und Bedienelements, was sich nachteilig auf die mögliche Anordnung und die Ästhetik im Fahrgastraum auswirkt. Zudem bringt eine zunehmende Gesamthöhe oft auch einen zunehmend großen Abstand zwischen dem Ort der Bildentstehung, nämlich dem oberen Polfilter, und der vorderen Grenzfläche bzw. insbesondere der Ebene des Maskierungsdrucks mit sich. Verlängert sich dieser optische Weg, so ist dies in der Regel für den Nutzer nachteilig. Zudem sind Bondschritte üblicherweise kritisch hinsichtlich der Entstehung mechanischer Spannungen, die - auf das Displaymodul einwirkend - zu Artefakten und damit verbundenen Einschränkungen, insbesondere hinsichtlich der Schwarzhomogenität, führen.

US 6,547,616 B1 offenbart ein Anzeige- und/oder Bedienelement mit einem Schichtstapel, der eine TFT-Schicht, eine an die TFT-Schicht angeordnete Flüssigkristallzelle und als Begrenzung der Flüssigkristallzelle einen Farbfilter aufweisendes Farbfilterglas aufweist.

JP 2008 139555 A offenbart ein Anzeigeelement mit einem Schichtstapel aus einer TFT-Schicht, einer Flüssigkristallzelle und einem Farbfilterglas. Die Flüssigkristallzelle ist durch eine seitliche Dichtung begrenzt. Das Farbfilterglas überlappt die Flüssigkristallzelle und die Dichtung.

Aufgabe der Erfindung ist es, eine in Bezug auf Bauraum und Fertigungsanforderungen sowie Stabilität optimierte Anzeige bereitzustellen. Insbesondere soll ein Anzeige- und Bedienelement bereitgestellt werden, das eine reduzierte Bauhöhe aufweist und weniger bzw. gar keine Bondingschritte beim Fertigen erfordert.

Diese Aufgabe wird durch ein Anzeige- und/oder Bedienelement mit den Merkmalen des unabhängigen Anspruchs gelöst.

Somit betrifft ein erster Aspekt der Erfindung ein Anzeige- und/oder Bedienelement, welches einen Schichtstapel mit einer TFT-Schicht und einer an die TFT-Schicht angeordneten Flüssigkristallzelle aufweist. An die Flüssigkristallzelle ist ferner ein einen Farbfilter aufweisendes Farbfilterglas angeordnet, wobei das Farbfilterglas an einer äußeren, also den Schichtstapel begrenzenden Oberfläche des Anzeige- und/oder Bedienelements angeordnet ist. Mit anderen Worten ist das an der Flüssigkristallzelle angeordnete Farbfilterglas (das den Farbfilter aufweisende Glas) zugleich die äußere Schicht des Anzeige- und/oder Bedienelements. Erfindungsgemäß ist das Farbfilterglas derart ausgebildet, dass es die TFT-Schicht und die Flüssigkristallzelle zumindest bereichsweise seitlich überragt. Das Farbfilterglas ist im überragenden Bereich eingerichtet, die Sicht auf die aktive Fläche des Displays, ggfs. mit geringfügigen Toleranzabständen zu begrenzen. Das ermöglicht, dass eine wichtige Funktion des oben genannten Frontglases bzw. Coverglases, also der üblicherweise zusätzlich am Stapel angeordneten Abdeckung des Schichtstapels, nämlich die Verblendung von Komponenten des Stapels, die für den Kunden nicht sichtbar sein sollen, von dem Farbfilterglas übernommen wird. Das Farbfilterglas deckt durch die erfindungsgemäße Ausgestaltung die inaktiven Randbereiche des Displays, wie beispielsweise eine Kontaktfläche zwischen TFT-Schicht und Farbfilterglas, mögliche Versorgungs- und Steuereinrichtungen der TFT-Schicht sowie weitere ab. Somit ist das erfindungsgemäße Anzeige- und/oder Bedienelement bei gleicher Funktionalität und Erfüllung optischer Ansprüche wie beim Stand der Technik deutlich dünner ausgebildet und weist zudem weniger bis gar keine Bondingschichten auf. Zudem wird der Abstand der Bildentstehungsebene zur Front des Aufbaus minimiert. Die Maskierung befindet sich quasi auf gleicher Ebene wie die der Bildentstehung (oberer Polfilter), was Blickwinkelbereiche maximiert und sonst übliche Abschattung durch Parallaxen Effekte minimiert.

Zur Erleichterung der Lesbarkeit wird im Weiteren das Anzeige- und/oder Bedienelement auch verkürzt nur als Anzeigeelement bezeichnet.

Das Farbfilterglas ist erfindungsgemäß funktionell als Frontglas des Anzeigeelements ausgestaltet und begrenzt als solches den Schichtstapel nach außen und ist bei bestimmungsgemäßem Gebrauch dem Nutzer zugewandt.

Dabei werden unter Glas nicht nur Siliziumverbindungen subsumiert, sondern vielmehr alle amorphen Feststoffe, insbesondere organische und anorganische Gläser, Duroplasten und Thermoplasten verstanden.

Vorliegend wird unter seitlich überragen verstanden, dass bezogen auf einen Querschnitt des Schichtstapels das Farbfilterglas in zumindest einer Richtung breiter ausgeführt ist als die weiteren Schichten des Schichtstapels, diese also seitlich überragt. In Aufsicht auf das Farbfilterglas bedeutet das, dass die weiteren Schichten durch das Farbfilterglas im betreffenden Bereich vom Farbfilterglas überdeckt werden.

Das Farbfilterglas umfasst, wie bei herkömmlichen Displays, einzelne den Pixeln des Anzeigeelements räumlich zuordenbare Farbfilter. Je nachdem, wie das Licht einer hinter der TFT-Schicht angeordneten Lichtquelle durch die Flüssigkristallzelle gelenkt wird, erzeugen diese Farbfilter eine definierte Farbe. Sie bestehen bevorzugt aus den Farben Rot, Grün und Blau, den sogenannten RGB Farben, da es mit diesen Farben möglich ist, jede andere Farbe zu erzeugen, weitere Farben wie z.B. Weiß oder Gelb sind jedoch ebenfalls denkbar.

Mögliche Ausgestaltungen der Flüssigkristallzelle sind dem Fachmann ebenso bekannt wie deren Befüllung, beispielsweise durch das im Folgenden kurz skizzierte ODF-Verfahren.

Die Flüssigkristallzellen werden üblicherweise vor Montage der Zellen auf die untere Glasplatte aufdosiert. Diese Technologie nennt sich One-Drop-Filling (ODF)-Technologie und lässt eine sehr genaue Dosierung der Flüssigkristallmenge zu. Das Versiegelungsmaterial wird dabei im Gegensatz zur konventionellen Befüllungsmethode via Kapillareffekten vollständig den Displaybereich umschließend aufgebracht. Anschließend wird der eingeschlossene Bereich per PDF befüllt und nach dem daran angeschlossenen Zusammenfügen der beiden Gläser wird das Bondmaterial ausgehärtet. Hierbei handelt es sich beispielsweise um eine thermisch und/oder optisch aushärtbare Polymerschicht. Alternative Befüllungsmethoden sind gleichermaßen bekannt.

In bevorzugter Ausgestaltung der Erfindung ist vorgesehen, dass das als Coverglas fungierende Farbfilterglas direkt zur Flüssigkristallzelle benachbart und insbesondere als diese begrenzende Schicht ausgeführt ist, somit kann vorteilhafterweise auf eine Haftvermittlerschicht verzichtet werden. Somit ist eine weitere funktionale Schicht, die die Höhe des Anzeigeelements vergrößern würde, in diesem Bereich ausgeschlossen.

In neueren Designstudien ist immer öfter zu sehen, dass im ausgeschalteten Zustand des Displays eine durchgehende, einfarbige schwarze Fläche gewünscht ist, das Display als solche hinter dem Coverglas also nicht lokalisiert werden kann. Dies bezeichnet man als Black-Panel oder Dead-Front Effekt. Da die aktive Displayfläche sich in der Regel jedoch mehr oder weniger stark vom Farbeindruck des Maskierungsdrucks/-coatings unterscheidet, sind Maßnahmen bevorzugt, die geeignet sind, diese geringfügigen Unterschiede weiter zu minimieren.

Mit Vorteil ist auf die Außenseite des Coverglases ein sich über die komplette äußere Fläche erstreckender Polfilter gebracht angeordnet. Dieser lässt nur ungefähr die Hälfte des von außen auffallenden Lichtes hindurchtreten, reduziert insgesamt die Helligkeit des Aufbaus bei Umgebungslicht und reduziert somit die Sichtbarkeit der Unterschiede.

Somit ist in weiterer Ausführung der Erfindung bevorzugt, den oberen Polfilter nach außen auf das Cover/Farbfilterglas zu bringen, um somit den Dead-Front Effekt bei gleichzeitiger Reduzierung nötiger Komponenten realisieren zu können. Dies ist beispielsweise in Figur 2 gezeigt.

Ein ähnlicher Ansatz zur Realisierung dieses Effekts beruht auf dem Einsatz eines eingefärbten Coverglases. Hierbei sind aus technischen Gründen Transmissionsgrade von mindestens 50 % bevorzugt. In gleichen Maße wie sich durch die Einfärbung die Durchsicht von außen reduziert, reduziert die Transmissionsreduktion auch den Durchtritt des Nutzlichtes des Display, beispielsweise der Hinterleuchtung. Das heißt, um die gleiche Helligkeit des Displays vor Kunde zu erreichen müsste hierbei die Helligkeit des Backlights verdoppelt werden. Dies geht mit Kosten und zusätzlicher Wärmeemission einher. Die Verwendung des oberen Polfilters bzw. eines entsprechend parallel zu diesem ausgerichteten linearen Polfilters vermeidet dies, da das (linear polarisierte) Licht des Displays ungehindert durch ihn hindurch treten kann, während das statistisch polarisierte Umgebungslicht dies nur zu 50% kann.

Zwecks Angleichens der sichtbaren Erscheinung der Displayfläche zu Bereichen des Maskierungsdrucks/-coatings sind weitere Maßnahmen vorteilhaft. Bevorzugt wird dies durch einen linearen Polarisationsfilter (Polfilter) erreicht, der als Beschichtung auf dem Farbfilterglas angeordnet ist oder diesen ersetzt Der Polfilter reduziert das statistisch polarisierte einfallende Licht und somit die Reflexion, was die geringen farblichen Unterschiede zwischen Displayfläche und maskierter Fläche weiter reduziert, ohne dabei das Nutzlicht des Displays (aufgrund identischer Polarisationsausrichtung) zu blockieren. Eine alternative, günstigere Ausführungsvariante ist beispielsweise die Einfärbung des Coverglasmaterials. In diesem Fall wird allerdings die Transmission des Nutzlichts gleichermaßen reduziert, was eine Erhöhung der Helligkeit des Backlights (Hinterleuchtung) mit damit einhergehenden Nachteilen erfordert.

Sämtliche Beschichtungen werden unabhängig voneinander bevorzugt mit üblichen für die jeweilige Schicht geeigneten Verfahren aufgebracht. So ist im Falle der Maskierungsschicht bevorzugt, dass die Schicht auf das Farbfilterglas in einer oder mehreren Lagen aufgedruckt ist. Unabhängig von dem Bereich, in dem das Farbfilterglas die TFT-Schicht und die Flüssigkristallzelle überragt, ist die Maskierungsschicht bevorzugt umlaufend, insbesondere weist ein Großteil, vorzugsweise weisen alle Bereiche, die nicht zur Darstellung von Bildinhalten im Anzeigeelement freizuhalten sind, die Maskierung auf. Mit besonderem Vorteil ist die Maskierung derart ausgebildet, dass die maskierten, also die Maskierung aufweisenden Bereiche optisch nicht von unbeleuchteten Bereichen des Anzeigeelements unterscheidbar sind.

Mit besonderem Vorteil ist die Maskierung auf einer der Flüssigkristallzelle zugewandten Seite des Farbfilterglases angeordnet und reicht ausgehend von einem umlaufenden Rand des Farbfilterglases seitlich bis an diese heran. Dabei weist die Flüssigkristallzelle eine vorzugsweise im Bereich einer Kante der Flüssigkristallzelle angeordnete Versiegelung auf, welche sich in Stapelrichtung des Schichtstapels erstreckt, wobei in der genannten Ausgestaltung der Erfindung die Maskierungsschicht bis an die äußere Kante der Versiegelung heranreicht. Alternativ erstreckt sich die Maskierungsschicht in einen Bereich zwischen Versiegelung und Farbfilterglas und erstreckt sich bis zum (inneren) Rand der Flüssigkristallzelle.

In letzterem Fall ist sichergestellt, dass auch die Versiegelung selbst durch die Maskierungsschicht verdeckt ist. Insbesondere in erstgenannter Alternative der vorgenannten Ausgestaltung ist bevorzugt, wenn die Versiegelung optional eine Färbung aufweist, die vorteilhafterweise einen der Maskierungsschicht ähnlichen Farbeindruck hinterlässt.

Vorliegend kann die Versiegelung auch als seitliche Zellenwand der Flüssigkristallzelle beschrieben beziehungsweise verstanden werden.

Sieht die Ausführung einen Polarisationsfilter auf dem Farbfilterglas vor, ist dieser bevorzugt über die gesamte Oberfläche des Farbfilterglases aufgebracht. Alternativ ist der Polarisationsfilter zumindest in einem mit der Flüssigkristallzelle deckungsgleichen Bereich, vorzugsweise in diesem Bereich vollflächig auf dem Farbfilterglas aufgebracht. Der Vorteil der vollflächigen Anordnung besteht insbesondere darin, dass der je nach Ausgestaltung notwenige Polarisationsfilter die eigentlich aktive Displayfläche des erfindungsgemäßen Anzeigeelements nicht indiziert. Mit anderen Worten ist bevorzugt, anstelle des oberen Polfilters des Displays einen Polarisationsfilter auf dem Farbfilterglas anzuordnen, wodurch der obere Displaypolfilter nach außen verlagert wird. Dies führt dazu, dass der Polarisationsfilter seitlich den Maskierungsdruck überragt und somit den Dead-Front/Black-Paneleffekt unterstützt. Hierbei ist der Polarisationsfilter bevorzugt vollflächig auf dem Farbfilterglas angeordnet.

Der Polarisationsfilter ist bevorzugt als Beschichtung, insbesondere als Folie auf dem Farbfilterglas angeordnet.

In weiter bevorzugter Ausgestaltung ist vorgesehen, dass die Maskierungsschicht bereichsweise unterbrochen ist und benachbart zum Schichtstapel auf einer der TFT-Schicht zugewandten Seite des Farbfilterglases eine Lichtquelle angeordnet ist, die eingerichtet ist, Licht in den unterbrochenen Bereich zu emittieren. Der unterbrochene Bereich weist insbesondere die Form verschiedenster Symbole auf. Im Bereich des Maskierungsdrucks sind gegenwärtig häufig beleuchtete Elemente untergebracht. Die vorstehende Ausgestaltung ermöglicht, dass dies ohne grundsätzliche Änderung des Aufbaus auch weiterhin möglich ist. Durch Verwendung des Polarisationsfilters auf der Außenseite des Farbfilterglases und/oder im aktiven Displaybereich des Anzeigeelements kann zudem vereinfacht ein "Verschwinde-Effekt", also eine Verblendung der weiteren Elemente des Schichtstapels, erreicht werden, bei dem beispielsweise ein hinterleuchtetes Symbol oder eine Anzeige im nicht beleuchteten Zustand nicht sichtbar ist. Alternativ oder zusätzlich zum außen am Farbfilterglas angeordneten Polarisationsfilter ist es vorteilhaft, ein sogenanntes Smoke-Coating (ein semitransparenter Lack) rückseitig (= Bauteil-Innen) auf die unterbrochenen Bereiche im Maskierungsdruck aufzubringen, um den Verschwindeeffekt zu optimieren/zu realisieren.

Dies ist für in diesem Bereich angeordnete optionale Warnleuchten besonders vorteilhaft, kann jedoch aus Gründen des Designs auch für normale Suchbeleuchtungen genutzt werden. Im ausgeschalteten Zustand wirken das erfindungsgemäße Anzeigeelement sowie die daneben angeordneten Elemente, wie eine durchgehende homogene Fläche.

In einer weiteren Ausführungsform ist vorgesehen, die Ausprägung durch eine sogenannte Jalousie/Lamellen-Folie (Typische Bezeichnungen etwa LAF oder LCF für Light Control Film) zu ergänzen, um Spiegelungen der Leuchten (Such/Funktion/Kontrollleuchten) in Seiten- oder Frontscheiben zu vermeiden.

In einer alternativen Ausführungsform ist zudem vorgesehen, die Struktur nicht in Form eines fertigen Folienproduktes sondern als Druck auf der Rückseite des Smoke Coatings einzubringen. Vorteilhaft in diesem Zusammenhang ist ein ausreichendes Aspektverhältnis des Drucks zu realisieren, da dies eine Abschattung eines größeren Winkelbereichs ermöglicht.

Mit Vorteil ist das Farbfilterglas, insbesondere in einem die TFT-Schicht und die Flüssigkristallzelle überragenden Bereich, gewölbt ausgeformt. Dabei ist bevorzugt der innere Bereich, der bezogen auf die Herstellbarkeit und Stabilität des Anzeigeelements vorteilhafterweise dem Bereich entspricht, der deckungsgleich mit der Flüssigkristallzelle ist, plan ausgeführt. Diese Ausgestaltung dient insbesondere der optischen Integration des Anzeigeelements an die Umgebung am Bestimmungsort, beispielsweise die Konsole eines Kraftfahrzeugs.

Weiter vorteilhaft weist das Farbfilterglas eine Dicke im Bereich von 0,25 mm bis 3,0 mm auf. Damit ist es gegebenenfalls dicker ausgeführt als die Farbfiltergläser des Standes der Technik. In dieser Ausgestaltung ist die Stabilität des Anzeigeelements, insbesondere des Frontglases, also der äußeren Oberfläche des Schichtstapels erhöht. Das erfindungsgemäße Farbfilterglas weist in dieser Ausgestaltung eine weitere Funktion des üblichen Cover-/ oder Frontglases auf, die neben der Verblendung in einer Stabilisierung und mechanischem Schutz des Schichtstapels zu sehen ist.

Zur weiteren Absicherung gegen das Auftreten von Artefakten aufgrund mechanischer Einwirkungen auf die Zelle, etwa durch Druck bei Touch-Bedienung, ist es vorteilhaft, die Flüssigkristallzelle durch eine erhöhte Anordnungsdochte von Abstandselementen, sogenannten Spacern mechanisch zu stabilisieren.

In bevorzugter Ausgestaltung des erfindungsgemäßen Anzeigeelements ist weiter vorgesehen, dass das Farbfilterglas ein Bauelement aufweist oder ein solches an dem Farbfilterglas angeordnet ist, welches eingerichtet ist, auf Berührung durch einen Nutzer elektrisch zu reagieren. Bei dem Bauelement handelt es sich um ein sogenanntes Touch-Bedienfeld.

Zu den bevorzugt verwendeten Mensch-Maschine-Schnittstellen zählen Widerstands-Folienschalter-Panele, piezoelektrische Schalt-Panele sowie Touch-Panele auf der Basis kapazitiver Sensorik.

Bevorzugt sind als Bedieneinheit kapazitive Schalter. Kapazitive Schalter und Taster sind in zwei Grundvarianten verfügbar, einmal mit mechanischem Taster und ein anderes Mal mit einem Annährungs- und Berührungssensor. Der "mechanische" Kontakt ist bei dieser Ausführungsform nicht zwingend, da bereits die Annäherung des Fingers die sensierte Kapazität beeinflusst. Bevorzugt sind ferner piezoelektrische Schalter vorgesehen. Piezoelektrizität (Druckelektrizität) ist eine Eigenschaft bestimmter kristalliner Werkstoffe, zu denen natürliche Kristalle wie Quarz, Rochelle-Salz, Turmalin sowie Keramiken wie Barium-Titanate und Blei-Zirkonat-Titanate (PZT) zählen. Erfolgt auf diese Werkstoffe eine Druckwirkung, verschiebt sich in der kristallinen Struktur eine zum Druck proportionale elektrische Ladung. Der Kristall ist dann nach außen nicht mehr elektrisch neutral. Umgekehrt ändert sich beim Anlegen eines elektrischen Feldes die Form des Kristalls oder der Keramik. Ein Hub von 1 bis 10 µm reicht aus, um eine für den Schaltvorgang nutzbare Spannung oder Ladung zu erzeugen. Für einen Schaltvorgang genügt eine Druckwirkung statt eines physikalischen Weges. Der Effekt lässt sich ebenfalls nutzen, um ein sogenanntes haptisches Feedback beispielsweise als Reaktion auf eine Eingabe zu realisieren.

Alternativ weist das Bedienfeld des erfindungsgemäßen Anzeigeelements zur Realisierung eines Touch-Sensors eine sogenannte optische Sensorik auf, bei der ein Gitter aus IR-Strahlen vor dem Display aufgespannt wird und mittels Detektion von Unterbrechungen (durch Finger beispielsweise) der Ort der Berührung erfasst wird. Ein Vorteil dieses Verfahrens ist die uneingeschränkte Funktion auch mit dicken Handschuhen beliebigen Materials oder Stiften, da es nur auf die Unterbrechung der Lichtstrahlen ankommt.

Die alternativ bevorzugten Touch-Sensoren oder Näherungsschalter dagegen arbeiten berührungsfrei und unterliegen somit keiner mechanischen Abnutzung. Ein sich annähernder leitender oder nichtleitender Gegenstand beeinflusst die Kapazität der Elektrode. Die Abtastelektrode lässt sich hinter einer isolierenden Schicht (meist Glas oder Kunststoff) anbringen. Ein gegen Umwelteinflüsse geschütztes Tastenfeld ist so einfach zu realisieren. Die gemessenen Kapazitäts- oder Ladungsveränderungen werden von einem Mikrocontroller ausgewertet. Die Auswertung erfolgt zumeist auf der Basis des bekannten Ladungstransfer-Prinzips.

Da das erfindungsgemäße Anzeigeelement die Reduktion der Schichthöhe zum Ziel hat, ist besonders bevorzugt, wenn das (Touch)-Bedienteil als sogenannter InCell-Touch ausgeführt wird, wobei der Berührungssensor mit beiden Sensorschichten in der Flüssigkristallzelle angeordnet wird, indem die Elektrodenstrukturen zur Ansteuerung der Zelle während Pulspausen als Sensor genutzt werden bzw. geeignete zusätzliche Strukturen in die TFT-Schicht eingebracht werden. Alternativ ist das Bedienteil als sogenannter OnCell Touch ausgeführt, wobei der Berührungssensor direkt auf die Flüssigkristallzelle aufgebracht wird, so dass kein zusätzliches Sensorglas erforderlich ist. Da erfindungsgemäß das Deckglas der Flüssigkristallzelle auch das Coverglas darstellt, entspricht in diesem speziellen Fall die Realisierung eines OnCell-Touch der einer sogenannten OGS (One Glas Solution) bei der die Sensorstruktur direkt, ohne zusätzliches "Sensorglas" auf das Coverglas aufgebracht wird. Die Sensorstruktur kann hierbei auf der Innen-, äußeren oder beiden Seiten des Cover/Farbfilterglases ausgebildet sein. Im Falle außen liegender Strukturen erfüllt der erfindungsgemäß außen angebrachte Polfilter gleichzeitig eine Schutzfunktion hinsichtlich der Sichtbarkeit und möglicher Beschädigung der Strukturen.

Eine weiter bevorzugte Alternative bildet die Anordnung des Touch-Bedienteils benachbart zum Farbfilterglas, wobei bevorzugt eine der TFT-Schicht zugewandte Oberfläche des Touch-Bedienteils und des Farbfilterglases zueinander fluchtend angeordnet sind. In dieser Ausgestaltung überragt das Farbfilterglas auf der dem Touch-Bedienteil zugewandten Seite nicht die TFT-Schicht. Vielmehr ist bevorzugt, dass die TFT-Schicht auf dieser Seite, beziehungsweise in diesem Bereich des Schichtstapels breiter ausgeführt ist als das Farbfilterglas.

Wie oben beschrieben, wird die TFT-Schicht über eine Steuereinheit elektrisch angesteuert. Die Steuereinheit umfasst einen sogenannten Treiber, der elektrisch mit der TFT-Schicht und der dort enthaltenen Mikroelektronik verbunden ist. Die Steuereinheit beziehungsweise der Treiber, der auf einem Chip angeordnet ist, ist in herkömmlichen Zellen in relativer Nähe zur aktiven Fläche, insbesondere in einem Randbereich auf der TFT-Schicht selbst angeordnet. Dies wird dadurch realisiert, dass die TFT-Schicht in diesem Bereich seitlich aus dem Schichtstapel (exklusive Cover-/Farbfilterglas) herausragt.

Im erfindungsgemäßen Anzeigeelement ist die Bauhöhe des Schichtstapels reduziert, so dass eine derartige Anordnung schwierig realisierbar ist. Dadurch ist bevorzugt, dass die TFT-Schicht elektrisch, insbesondere über eine flexible Leitung, mit der Steuereinheit verbunden ist, welche innerhalb des Schichtstapels, insbesondere benachbart zur TFT-Schicht und/oder aktiven Flächen des Anzeigeelements oder außerhalb des Schichtstapels angeordnet ist. Dies wird vorzugsweise über eine sogenannte Chip-on-foil (COF)-Lösung realisiert, bei der der Chip des Treibers auf einer Folie fixiert und über flexible Leitungen mit der TFT-Schicht verbunden ist. Der Chip wird dann bevorzugt außerhalb des Schichtstapels oder seitlich beispielsweise vertikal zu diesem angeordnet.

Alternativ oder zusätzlich weist der Treiber eine geringere Höhe als bekannte Modelle auf und/oder ist weiterhin auf der TFT-Schicht angeordnet. Um bei letzterer Ausführungsform die erforderliche Bauhöhe (für den Treiber) nicht zu unterschreiten, weist die TFT-Schicht in einem Bereich außerhalb einer Projektionsfläche der Flüssigkristallzelle auf der TFT-Schicht eine Ausnehmung auf, welche beispielsweise durch Ätzen eingebacht wird und eine Fläche aufweist, die der Grundfläche des Treibers beziehungsweise des Chips mindestens entspricht. Der Chip ist dann innerhalb dieser Ausnehmung angeordnet und elektrisch mit der TFT-Schicht in Kontakt.

Weitere bevorzugte Ausgestaltungen der Erfindung ergeben sich aus den übrigen, in den Unteransprüchen genannten Merkmalen.

Die verschiedenen in dieser Beschreibung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Querschnittsskizze eines Anzeige- und Bedienelements nach dem Stand der Technik,
- Figur 2: eine schematische Querschnittsskizze eines Anzeige- und Bedienelements in einer ersten Ausführungsform der Erfindung,
- Figur 3: eine schematische Querschnittsskizze eines Anzeige- und Bedienelements in einer zweiten Ausführungsform der Erfindung,
- Figur 4: eine schematische Querschnittsskizze eines Anzeige- und Bedienelements in verschieden Ausführungsformen der Erfindung bezogen auf die Anordnung einer Maskierungsschicht,
- Figur 5: eine schematische Querschnittsskizze eines Anzeige- und Bedienelements in einer dritten Ausführungsform der Erfindung,
- Figur 6: eine schematische Darstellung eines Anzeige- und Bedienelements in einer bevorzugten Ausführungsform in Aufsicht, und
- Figur 7: eine schematische Darstellung eines Anzeige- und Bedienelements in einer vierten Ausführungsform in Aufsicht und seitlicher Schnittansicht.

Figur 1 zeigt den typischen Aufbau eines Anzeige- und Bedienelements 10' nach dem Stand der Technik. Ein solches umfasst typischerweise eine Mehrzahl aneinander angeordneter aufeinander abgestimmter funktioneller Schichten. Die zentrale Schicht bildet ein Flüssigkristallmodul beziehungsweise eine Flüssigkristallzelle.

Ein Flüssigkristall-Modul (LCM) bzw. -Zelle, umfasst zwei Glasplatten mit dazwischen eingebrachtem Flüssigkristallmaterial. Die Öffnung über die das Flüssigkristallmaterial zwischen den Glasplatten angeordnet ist, wird mittels einer Versiegelungsschicht 11 verschlossen. Auf zumindest einer der Glasplatten ist ein Polarisationsfilter 4 aufgebracht. Ein zweiter, vorzugsweise zum ersten um 90° in der Ebene gedrehter Polarisationsfilter 7 ist auf einer dem ersten gegenüberliegenden Seite der Flüssigkristallzelle angeordnet. An einer der beiden, vorzugsweise der oberen Glasscheiben ist zudem ein Farbfilterglas 3 angeordnet. Dieses ist derart eingerichtet, dass mittels durch die Flüssigkristallzelle 1 dringenden Lichts auf einer der Flüssigkristallzelle 1 abgewandten Seite des Farbfilterglases je Pixel 3 Sub-Pixel in rot, grün und blau realisiert werden.

Auf einer dem Farbfilterglas 3 gegenüberliegenden Seite der Flüssigkristallzelle 1 ist eine TFT-Schicht 2 mit einer Kontrolleinheit, umfassend einen auf der TFT-Schicht 2 angeordneten Treiber 21 und entsprechende Signalleitungen, über die Treiber 21 und TFT-Schicht 2 miteinander verbunden sind. Die Kontrolleinheit dient der Ansteuerung individueller Pixel. Unter Ansteuerung ist hiermit das Anlegen einer Spannung zu verstehen, welche im unbeschränkenden Beispiel einer IPS-Zelle den Flüssigkristall oberhalb oder alternativ zwischen der Elektroden geeignet ausrichtet, um den gewünschten Lichtdurchlass zu realisieren. Der Treiber 21, ein Transistortreiber, ist eine Schaltung, welche den nötigen Strom zur Verfügung stellt, um einen Transistor in der erforderlichen Zeit ein- beziehungsweise auszuschalten. Es handelt sich dabei meist um einen Verstärker mit zusätzlichem Pegelwandler. Dadurch ist es möglich, mit einem Logikausgang große Lasten mit MOSFETs beziehungsweise IGBTs zu schalten. Dieser Treiber kann analog (linear) oder digital arbeiten.

Das durchgelassene Licht wird von der Hinterleuchtung 8, einer sogenannten Backlight Unit (BLU) 8 realisiert, welche in der Regel einen Reflektor, einen Lichtleiter, Diffusoren, Beam-Shaping-Folien; Recycling Folien, ggfs. Lamellenfolien sowie LED(s) umfasst. BLUs werden in unterschiedlichen Konzepten realisiert, beispielsweise als Side- bzw. Edge lit (LEDs sitzen am Rand und koppeln seitlich ein) oder Matrix Backlight (LEDs sind hinter der Displayfläche verteilt und ermöglichen durch geeignete Ansteuerung die Realisierung eines besseren dynamischen Kontrasts).

Bei der Anwendung in einem Kraftfahrzeug, beispielsweise als Klimabedienteil oder ähnlichem, weist ein herkömmliches Anzeige- und Bedienelement 10' ferner ein Deck- oder Frontglas 9 (Cover) auf, was häufig eingerichtet ist, verschiedene insbesondere optische Oberflächeneigenschaften des Anzeige- und Bedienelements 10' wie AntiGlare-Effekt, AntiReflex, AntiFingerprint, Easy-to-Clean etc. sowie das allgemeine Design des Anzeigeelements zu realisieren.

Das Deckglas 9 ist größer als der übrige Schichtstapel ausgeführt und weist einen Maskierungsdruck 31 - in der Regel schwarz - auf. Dabei werden Deckgläser zunehmend nicht ausschließlich eben / flach ausgeführt sondern seitlich oder gar im Displaybereich an die Umgebung angepasst in dem Bereiche gekrümmt ausgeführt..Der Maskierungsdruck reicht entweder bis an die aktive Fläche des Anzeige- und Bedienelements 10' unter Berücksichtigung von Positionstoleranzen heran oder auch geringfügig darüber hinaus. Die aktive Fläche des Anzeige- und Bedienelements 10' entspricht dem Bereich, in dem die TFT-Schicht 2, die Flüssigkristallzelle 1, die Polarisatoren 4, 7 und das Farbfilterglas 3 überlappen. Vorliegend ist unter aktiver Fläche der Bereich des Anzeigeelements zu verstehen, der schaltbare Pixel aufweist. Daneben gibt es in der Regel einen Randbereich, der sich optisch vom ausgeschalteten Anzeigeelement nicht wesentlich unterscheidet und der gegebenenfalls sichtbar sein kann. In manchen Geräten werden in den Bereich der Maskierung 31 Warnlampen/Anzeigeleuchten integriert und gegebenenfalls durch weitere transluzente Beschichtungen im ausgeschalteten Zustand verborgen. In beiden Fällen dient der Maskierungsdruck 31 der Maskierung und/oder als Schablone der Hinterleuchtung 8, so dass verschiedene Symbole (zum Beispiel Blinker, Warnleuchten, Parkbremse, etc.) dargestellt werden können. Darüber hinaus werden bei einem Anzeigebedienteil auch Sensorflächen als Taster ausgeführt. In diesem Fall ist der Touch-Sensor entsprechend weiter ausgedehnt und dem Touch-Layout angepasst oder zusätzliche Touch-Sensoren realisiert. Hierbei ist beispielsweise vorgesehen eine Touch-Struktur vor dem Display durch eine andere Elektronik auszulesen als die unter Sensorknöpfen. Die beiden Strukturen wären dann elektrisch voneinander unabhängig ausgestaltet.

Alle vorgenannten Komponenten 1-7 werden in der Regel optisch aufeinander gebondet und nicht selten jeweils von verschiedenen Lieferanten bereitgestellt.

Die Figuren 2 bis 5 und 7B zeigen je ein Anzeige- und Bedienelement 10 in der gleichen Darstellung und mit den gleichen Funktionen wie das oben Beschriebene in bevorzugten Ausführungsformen der Erfindung.

Den Ausführungsformen gemeinsam ist die Anordnung einer der TFT-Schicht 2 an die Flüssigkristallzelle 1. Die TFT-Schicht 2 ist mit der Steuereinheit zur (An)Steuerung der TFT-Schicht 2 verbunden. Der Treiber 21 der Steuereinheit umfasst einen Chip, der wie in Figur 2 gezeigt auf einem separaten Bauteil, beispielsweise einer Folie oder einer Platte, angeordnet und über flexible Leitungen 23 mit der TFT-Schicht verbunden ist. Eine Alternative hierzu ist in Figur 3 gezeigt. Bei der in Figur 3 gezeigten Ausführungsform ist der Treiber 21 direkt auf der TFT-Schicht angeordnet. Vorteilhaft erfolgt die Anordnung des Treibers 21 dabei in einer Ausnehmung beziehungsweise einem Rücksprung der TFT-Schicht 2.

Auf einer der Flüssigkristallzelle 1 abgewandten Seite der TFT-Schicht 2 ist beabstandet die Hinterleuchtung 8 angeordnet.

Die Flüssigkristallzelle 1 wird auf einer der TFT-Schicht abgewandten Seite durch das Farbfilterglas 3 begrenzt. Das Farbfilterglas 3 ist breiter ausgeführt als die darunterliegenden Schichten. Somit überragt es den Schichtstapel und insbesondere die Flüssigkristallzelle 1 und zumindest bereichsweise die TFT-Schicht 2 seitlich.

In den gezeigten Ausführungsformen weist das Farbfilterglas 3 ferner eine Maskierungsschicht 31 auf. Diese ist im die Flüssigkristallzelle 1 überragenden Bereich auf einer der Flüssigkristallzelle 1 zugewandten Seite des Farbfilterglases 3 angeordnet.

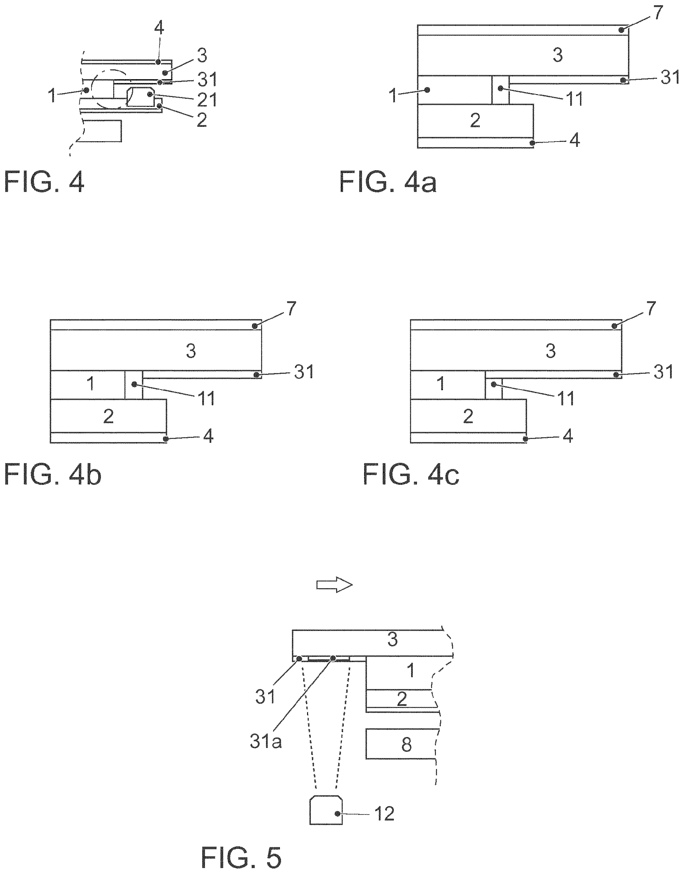

Figur 4 zeigt im Detail bevorzugte Ausgestaltungen der Anordnung der Maskierungsschicht 31 am Farbfilterglas.

Die Abbildung 4 zeigt in vergrößerter Darstellung in a) eine Variante, bei der die Maskierungsschicht 31 seitlich bis an die Versiegelung 11 der Flüssigkristallzelle 1 heranreicht. Diese ist insbesondere in dieser Ausführungsform ihrerseits farblich so gestaltet, dass sie bei bestimmungsgemäßem Gebrauch von Nutzer-Seite betrachtet ein einheitliches Bild darstellt, da die Übergänge und Grenzen der Bauelemente des Schichtstapels von einer dem Schichtstapel abgewandten Seite durch das Farbfilterglas 3 optisch nicht sichtbar sind. In Abbildung 4b ist eine Alternative gezeigt, bei der die Maskierungsschicht 31 seitlich bis an die Versiegelung 11 heranreicht, ohne dass zusätzliche Maßnahmen wie Einfärbung der Versiegelungsschicht 11 bei der Herstellung durchgeführt wurden. Dabei kann die Versiegelungsschicht 11 zum einen kürzer ausgeführt sein, wobei die Maskierungsschicht 31 ebenfalls die Versiegelungsfunktion für die Flüssigkristallzelle inne hat. Alternativ ist die Versiegelungsschicht 11 komprimierbar und wird bei Anordnung der Maskierungsschicht 31 an der Flüssigkristallzelle 1 soweit von der Maskierungsschicht 31 komprimiert, wie erforderlich. In jedem Fall ist es vorteilhaft, wenn die Maskierungsschicht 31 vor der Anordnung des Farbfilterglases 3 an der Flüssigkristallzelle 1 auf dem Farbfilterglas 3 angeordnet wird.

Das Farbfilterglas 3 selbst ist vorzugsweise aus einem durchsichtigen festen, wenig duktilen Material, wie beispielsweise, Glas, Plexiglas, Thermoplasten und/oder Duroplasten oder Ähnlichem gefertigt. Diese können mittels Film injection Moldings, Gießens, Spritzgießens oder Ähnlichem in die Bestimmungsform gebracht werden. Selbiges gilt für die weiteren Materialien der Flüssigkristallzelle 1. Ferner kann das Farbfilterglas als Verbundglas umfassend eine Mehrzahl gleicher oder verschiedener Materialien ausgeführt sein.

Schließlich zeigt Figur 4c eine Ausführungsform, in der die Maskierungsschicht 31 zumindest bereichsweise mit der Versiegelung 11 überlappend angeordnet ist. Hierbei sind auch Varianten denkbar, bei denen der Maskierungsdruck weiter als hier gezeigt in den Bereich der Flüssigkristallzelle 1 hineinragt.

Die Maskierungsschicht 31 ist bevorzugt auf das Farbfilterglas 3 aufgedruckt, aufgerakelt, aufgespritzt oder durch Tauchen aufgebracht, wobei in den letztgenannten Alternativen zuvor ein entfernbares Negativ auf der Oberfläche des Farbfilterglases 3 angeordnet wurde.

Die Maskierungsschicht 31 kann auch als eine Beschichtung, zum Beispiel realisiert durch Vakuumprozesse, ausgeführt werden, wenn dies zum Beispiel aufgrund der gewählten Anordnung aus Figur 4 nötig ist, um die erforderliche Abdichtung der Flüssigkristallzelle 1 zu gewährleisten und/oder um die nötige Hitzebeständigkeit der Maskierungsschicht 31 zu erreichen, die erforderlich ist um einen Toch-Sensor aufbringen zu können.

In einer weiteren Variante kann die Maskierungsschicht 31, insbesondere bei Ausführung beispielsweise mittels Sputterns, CVD oder ähnlichem aufgebrachten sogenanntem Schwarzdruck, auch nur lokal und nicht vollflächig um die aktive Fläche des Anzeigeelements 10 herum ausgeführt sein, insbesondere dann, wenn in Kombination mit einem durchgängigen oberen Polarisationsfilter 7 bereits ein ausreichender Verblendungseffekt erzielt wird und die Maskierungsschicht 31 hauptsächlich der formgebenden Abgrenzung von Anzeigen (siehe Figur 5) dient.

Im Bereich der Maskierungsschicht 31 sind häufig beleuchtete Elemente untergebracht. Dies ist ohne grundsätzliche Änderung des Aufbaus auch im erfindungsgemäßen Anzeigeelement 10 möglich, wie beispielsweise in Figur 5 gezeigt. Durch Verwendung des oberen Polarisationsfilters 7 auf der Außenseite der Farbfilterschicht 3 kann zudem vereinfacht ein Verblendungseffekt, auch als "Verschwinde-Effekt" bezeichnet, erreicht werden, bei dem ein hinterleuchtetes Symbol oder eine Anzeige im nicht beleuchteten Zustand nicht sichtbar ist. Dies ist für Warnleuchten essenziell, wird jedoch aus Gründen des Designs zunehmend auch für normale Suchbeleuchtung genutzt. Im ausgeschalteten Zustand wirkt das Anzeigeelement 10 sowie die daneben angeordneten Elemente wie eine durchgehende homogene Fläche.

Um die Funktionalität des Deckglases, die zu einem wesentlichen Teil auch einen Stabilitätsaspekt darstellt, ist bevorzugt das Farbfilterglas 3 dicker als sonst üblich auszuführen. Beispielsweise ist das Farbfilterglas 3 statt der üblichen 0,25-1,0 mm im erfindungsgemäßen Anzeigeelement bevorzugt im Bereich von 0,5 bis 3 mm, insbesondere im Bereich von 0,5 bis 2 mm dick.

Für manche Anwendungen im Kraftfahrzeugbau besteht die Pflicht den sogenannten Kopfaufschlagtest zu bestehen. Grundsätzlich wird eine solche bereits dadurch erfüllt, dass der obere Polarisationsfilter 7 auf der von der Flüssigkristallzelle 1 abgewandten Seite des Farbfilterglases 3 aufgebracht wird. Zur Erhöhung des Stabilisationseffekts kann der am Farbfilterglas 3 angeordnete Polarisationsfilter 7 dicker und/oder auf geeignetem Folien-Trägermaterial ausgeführt werden. Alternativ oder zusätzlich kann eine zusätzliche Folie auf und/oder unter dem oberen Polarisationsfilter 7 aufgebracht werden.

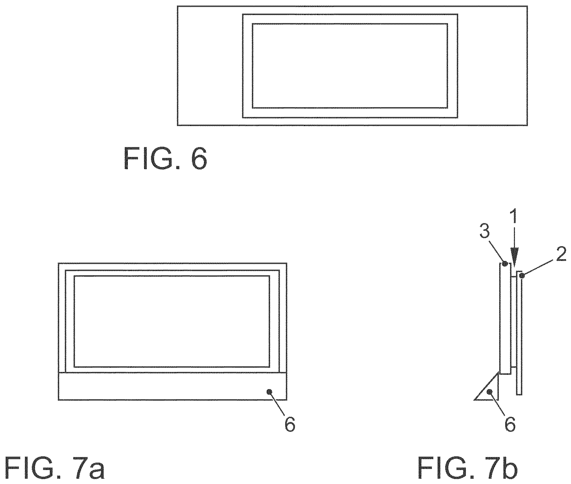

Neben der bis hierhin aufgeführten Variante, bei der das Farbfilterglas 3 seitlich breiter ausgeführt ist als die TFT-Schicht 2, sind auch Varianten denkbar, bei denen auf einer oder mehreren Seiten des Schichtstapels die TFT-Schicht 2 weiter ausgedehnt ist als das Farbfilterglas 3, zum Beispiel dann, wenn der reinen Anzeigefunktion des Anzeigeelements 10 noch eine Fühlhilfe für einen Berührungssensor, beispielsweise in Form eines sogenannten Touch-Sliders oder andere Eingabeelemente vorgelagert sind, an die das Anzeigeelement 10 nahtlos anschließt (siehe Figur 6).

### Bezugszeichenliste

- 10: Anzeige- und/oder Bedienelement
- 10': Anzeige- und/oder Bedienelement nach dem Stand der Technik

- 1: Flüssigkristallzelle
- 11: Versiegelung

- 2: TFT-Schicht
- 21: Treiber bzw. Treiber-IC
- 23: flexible Leitungen

- 3: Farbfilterglas
- 31: Maskierungsschicht

- 4, 7: Polarisationsfilter
- 5: Bonding
- 6: Touch-Bedienfeld
- 8: Hinterleuchtung
- 9: Frontglas

## Patentansprüche

1. Anzeige- und/oder Bedienelement (10) umfassend einen Schichtstapel, aufweisend
- eine TFT-Schicht (2),
- eine an die TFT-Schicht (2) angeordnete Flüssigkristallzelle (1) und
- ein als Begrenzung der Flüssigkristallzelle (1) an der der TFT-Schicht abgewandten Seite angeordnetes, einen Farbfilter aufweisendes Farbfilterglas (3), wobei das Farbfilterglas (3) an einer äußeren Oberfläche des Anzeige- und/oder Bedienelements (10) angeordnet ist,
**dadurch gekennzeichnet, dass** das Farbfilterglas (3) die TFT-Schicht (2) und die Flüssigkristallzelle (1) zumindest bereichsweise seitlich überragt und das Farbfilterglas (3) im überragenden Bereich eingerichtet ist, den Schichtstapel zu verbergen.

2. Anzeige- und/oder Bedienelement (10) nach einem der vorhergehenden Ansprüche, **dadurch gekennzeichnet, dass** das Farbfilterglas (3) im die TFT-Schicht (2) und die Flüssigkristallzelle (1) überragenden Bereich, insbesondere durch eine aufgebrachte Maskierungsschicht (31), eine reduzierte Transparenz aufweist.

3. Anzeige- und/oder Bedienelement (10) nach Anspruch 2, **dadurch gekennzeichnet, dass** die Maskierungsschicht (31) auf einer der Flüssigkristallzelle (1) zugewandten Seite des Farbfilterglases (3) angeordnet ist und ausgehend von einem umlaufenden Rand des Farbfilterglases (3) bis an eine Kante einer sich in Stapelrichtung des Schichtstapels erstreckende Versiegelung (11) der Flüssigkristallzelle (1) heranreicht oder sich in einen Bereich zwischen Versiegelung (11) und Farbfilterglas (3) erstreckt, wobei die Versiegelung (11) optional eine Färbung aufweist.

4. Anzeige- und/oder Bedienelement (10) nach einem der Ansprüche 2 oder 3, **dadurch gekennzeichnet, dass** die Maskierungsschicht (31) bereichsweise unterbrochen ist und benachbart zum Schichtstapel auf einer der TFT-Schicht (2) zugewandten Seite des Farbfilterglases (3) eine Lichtquelle (12) angeordnet ist, die eingerichtet ist, Licht in den unterbrochenen Bereich zu emittieren.

5. Anzeige- und/oder Bedienelement (10) nach einem der vorhergehenden Ansprüche, **dadurch gekennzeichnet, dass** das Farbfilterglas (3), insbesondere vollflächig, einen Polarisationsfilter (7) aufweist.

6. Anzeige- und/oder Bedienelement (10) nach einem der vorhergehenden Ansprüche, **dadurch gekennzeichnet, dass** das Farbfilterglas (3) zumindest bereichsweise gewölbt ausgeformt ist.

7. Anzeige- und/oder Bedienelement (10) nach einem der vorhergehenden Ansprüche, **dadurch gekennzeichnet, dass** das Farbfilterglas (3) eine Dicke im Bereich von 0.5 mm bis 3 mm aufweist.

8. Anzeige- und/oder Bedienelement (10) nach einem der vorhergehenden Ansprüche, **dadurch gekennzeichnet, dass** das Farbfilterglas (3) ein Bauelement aufweist oder ein solches an dem Farbfilterglas (3) angeordnet ist, welches eingerichtet ist, auf Berührung durch einen Nutzer elektrisch zu reagieren.

9. Anzeige- und/oder Bedienelement (10) nach einem der vorhergehenden Ansprüche, **dadurch gekennzeichnet, dass** die TFT-Schicht (2) elektrisch, insbesondere über eine flexible Leitung (23), mit einer Steuereinheit (21) verbunden ist, welche innerhalb einer Flucht des Schichtstapels, insbesondere benachbart zur TFT-Schicht (2), oder außerhalb des Schichtstapels angeordnet ist.

## Claims

1. Display and/or operating element (10) comprising a layer stack having
- a TFT layer (2),
- a liquid crystal cell (1) arranged on the TFT layer (2), and
- a colour filter glass (3) which is arranged in the form of a delimitation of the liquid crystal cell (1) on its side facing away from the TFT layer and has a colour filter, wherein the colour filter glass (3) is arranged on an outer surface of the display and/or operating element (10),
**characterized in that** the colour filter glass (3) laterally projects beyond the TFT layer (2) and the liquid crystal cell (1) at least regionally, and the colour filter glass (3) is configured in the projecting region to conceal the layer stack.

2. Display and/or operating element (10) according to the preceding claim, **characterized in that** the colour filter glass (3) has reduced transparency in the region projecting beyond the TFT layer (2) and the liquid crystal cell (1), in particular due to an applied masking layer (31).

3. Display and/or operating element (10) according to Claim 2, **characterized in that** the masking layer (31) is arranged on a side of the colour filter glass (3) facing the liquid crystal cell (1) and, starting from a circumferential periphery of the colour filter glass (3), extends up to an edge of a seal (11) of the liquid crystal cell (1) extending in the stack direction of the layer stack or extends into a region between the seal (11) and the colour filter glass (3), wherein the seal (11) optionally has a colouration.

4. Display and/or operating element (10) according to either of Claims 2 and 3, **characterized in that** the masking layer (31) is regionally interrupted and a light source (12) configured to emit light into the interrupted region is arranged adjacent to the layer stack on a side of the colour filter glass (3) facing the TFT layer (2).

5. Display and/or operating element (10) according to any of the preceding claims, **characterized in that** the colour filter glass (3) has a polarization filter (7), in particular over its entire area.

6. Display and/or operating element (10) according to any of the preceding claims, **characterized in that** the colour filter glass (3) at least regionally has a curved form.

7. Display and/or operating element (10) according to any of the preceding claims, **characterized in that** the colour filter glass (3) has a thickness ranging from 0.5 mm to 3 mm.

8. Display and/or operating element (10) according to any of the preceding claims, **characterized in that** the colour filter glass (3) has a component, or such component is arranged on the colour filter glass (3), which is configured to react electrically to a touch by a user.

9. Display and/or operating element (10) according to any of the preceding claims, **characterized in that** the TFT layer (2) is connected electrically, in particular via a flexible line (23), to a control unit (21) which is arranged in a line with the layer stack, in particular adjacent to the TFT layer (2), or outside the layer stack.

## Revendications

1. Élément d'affichage et/ou d'opération (10) comprenant un empilement de couches comportant
- une couche TFT (2),
- une cellule à cristaux liquides (1) disposée sur la couche TFT (2) et
- un verre de filtre coloré (3) qui est disposé en tant que limite de la cellule à cristaux liquides (1) du côté opposé à la couche TFT et qui comporte un filtre coloré, le verre de filtre coloré (3) étant disposé sur une surface extérieure de l'élément d'affichage et/ou d'opération (10),
**caractérisé en ce que** le verre de filtre coloré (3) fait saillie latéralement, au moins par zones, de la couche TFT (2) et de la cellule à cristaux liquides (1) et le verre de filtre coloré (3) est conçu dans la zone en saillie pour masquer l'empilement de couches.

2. Élément d'affichage et/ou d'opération (10) selon l'une des revendications précédentes, **caractérisé en ce que** le verre de filtre coloré (3) présente une transparence réduite dans la zone saillant de la couche TFT (2) et de la cellule à cristaux liquides (1), notamment par le biais d'une couche de masquage appliquée (31) .

3. Élément d'affichage et/ou d'opération (10) selon la revendication 2, **caractérisé en ce que** la couche de masquage (31) est disposée sur un côté du verre de filtre coloré (3) se dirigeant vers la cellule à cristaux liquides (1) et va d'une bordure périphérique du verre de filtre coloré (3) jusqu'à un bord d'un joint (11), s'étendant dans la direction d'empilement de l'empilement de couches, de la cellule à cristaux liquides (1) ou s'étend jusque dans une zone située entre le joint (11) et le verre de filtre coloré (3), le joint (11) comportant éventuellement une coloration.

4. Élément d'affichage et/ou d'opération (10) selon l'une des revendications 2 et 3, **caractérisé en ce que** la couche de masquage (31) est interrompue par zones et une source lumineuse (12), qui est conçue pour émettre de la lumière dans la zone interrompue, est disposée de manière adjacente à l'empilement de couches sur un côté du verre de filtre coloré (3) qui est dirigé vers la couche TFT (2).

5. Élément d'affichage et/ou d'opération (10) selon l'une des revendications précédentes, **caractérisé en ce que** le verre de filtre coloré (3) comporte, notamment sur toute sa surface, un filtre polarisant (7).

6. Élément d'affichage et/ou d'opération (10) selon l'une des revendications précédentes, **caractérisé en ce que** le verre de filtre coloré (3) présente au moins par zones une forme bombée.

7. Élément d'affichage et/ou d'opération (10) selon l'une des revendications précédentes, **caractérisé en ce que** le verre de filtre coloré (3) a une épaisseur comprise dans la gamme allant de 0,5 mm à 3 mm.

8. Élément d'affichage et/ou d'opération (10) selon l'une des revendications précédentes, **caractérisé en ce que** le verre de filtre coloré (3) comporte un élément structurel ou un tel élément structurel est disposé sur le verre de filtre coloré (3), lequel est conçu pour répondre électriquement au contact d'un utilisateur.

9. Élément d'affichage et/ou d'opération (10) selon l'une des revendications précédentes, **caractérisé en ce que** la couche TFT (2) est reliée électriquement, notamment par le biais d'une ligne souple (23), à une unité de commande (21) qui est disposée à l'intérieur d'un alignement de l'empilement de couches, en particulier de manière adjacente à la couche TFT (2), ou à l'extérieur de l'empilement de couches.
